# EUROPÄISCHE PATENTSCHRIFT

(11) **EP 2 883 754 B1**
(45) Veröffentlichungstag und Bekanntmachung des Hinweises auf die Patenterteilung: **18.10.2017**
(21) Anmeldenummer: 14002981.0
(22) Anmeldetag: 28.08.2014
(51) Int. Cl.: B60R 19/56, B60G 7/00, B60G 21/05

(54) **FAHRZEUG, INSBESONDERE NUTZFAHRZEUG, MIT EINEM VORDEREN UNTERFAHRSCHUTZ**
VEHICLE, IN PARTICULAR COMMERCIAL VEHICLE, WITH A FRONT UNDERRIDE BARRIER
VÉHICULE, EN PARTICULIER VÉHICULE UTILITAIRE, DOTÉ D'UNE PROTECTION AVANT ANTI-ENCASTREMENT

(30) Priorität: 13.12.2013 DE 102013021005
(43) Veröffentlichungstag der Anmeldung: 17.06.2015
(73) Patentinhaber: MAN Truck & Bus AG, 80995 München (DE)
(72) Erfinder: Stiermann, Erwin, 86356 Neusäß (DE)
(74) Vertreter: Liebl, Thomas

(56) Entgegenhaltungen:
- DE-A1- 19 700 661
- FR-A1- 2 530 561
- US-A- 3 879 074

## Beschreibung

Die Erfindung betrifft ein Nutzfahrzeug mit einem vorderen Unterfahrschutz nach dem Oberbegriff des Anspruchs 1, bekannt aus der DE 197 00 661 A1. Nutzfahrzeuge sind wegen ihrer relativ großen Bodenfreiheit mit Unterfahrschutzeinrichtungen, insbesondere zum Schutz für PKWs und deren Insassen, bei Kollisionen ausgerüstet. Ein solcher vorderer Unterfahrschutz ist regelmäßig unter dem vorderen Stoßfänger des Nutzfahrzeugs in einer diesbezüglich geringeren Höhe eines PKW-Stoßfängers angeordnet und bei einem Aufprall nachgiebig mittels energieverzehrend ausgebildeter Halterungselemente am Nutzfahrzeug befestigt.
Dazu ist es aus der DE 42 34 143 A1 bekannt, an einem im Frontbereich gegabelten Rahmenlängsträger eines Frontlenker-LKWs vorne am unteren Gabelast ein energieverzehrend ausgebildetes Halterungselement für einen in Höhe einer PKW-Stoßstange angeordneten Unterfahrschutz vorzusehen. Eine solche Halterung eines Unterfahrschutzes erfordert eine gegabelte Ausbildung der Rahmenlängsträgeranordnung im Frontbereich und ist daher aufwendig bei großem Bauraumbedarf.
Weiter ist es allgemein bekannt, Halterungselemente für einen frontseitigen Unterfahrschutz an rahmenseitig befestigten Konsolen abgestützt anzubauen. Eine solche rahmenseitige Konsolenabstützung erfordert ungünstig viel Bauraum im Frontbereich, insbesondere eines Frontlenker-LKWs. Erforderliche Freiräume zur Unterbringung und Anbindung anderer Fahrzeugteile werden durch eine solche Konsolenabstützung beansprucht oder zumindest einschränkt. Insbesondere treten durch immer größer werdende Kühleraggregate zunehmend Bauraumprobleme im Frontbereich eines Frontlenker-LKWs auf.

Weiter ist ein Unterfahrschutz für ein Nutzfahrzeug aus der DE 197 00 661 A1 bekannt, bei der zwei den Fahrzeugrahmen des Nutzfahrzeuges bildende Längsträger durch mehrere Querträger miteinander verbunden sind. An jedem der beiden Längsträger ist, bezogen auf die Vorwärtsfahrrichtung, vor der Vorderachse je eine Konsole angebracht, welche in Richtung Fahrbahnoberfläche von den Längsträgern absteht. Die Konsolen sind mit den Längsträgern verschraubt und dienen ferner als Lagerbock für die Führungslenker der als Starrachse ausgebildeten Vorderachse. Beide Führungslenker sind an der jeweiligen Konsole an definiert vorgegebenen Stellen angelenkt. Achsseitig sind die beiden Führungslenker jeweils an einem mit der Starrachse verbundenen Lagerbock angelenkt. Die Konsolen bilden darüber hinaus zwei Abstützlager für einen Unterfahrschutz, der aus einem Stoßauffangelement besteht, welches sich in Querrichtung über die gesamte Nutzfahrzeugbreite erstreckt und welches mit den beiden Konsolen auf deren Vorderseite verschraubt ist.

Aufgabe der Erfindung ist es daher, bei einem Nutzfahrzeug eine hinsichtlich der Platzbeanspruchung günstige Befestigung für einen vorderen Unterfahrschutz vorzuschlagen.

Diese Aufgabe wird gelöst mit den Merkmalen der unabhängigen Ansprüche. Vorteilhafte Ausgestaltungen sind Gegenstand der darauf rückbezogenen Unteransprüche.

Gemäß Anspruch 1 wird ein Nutzfahrzeug, insbesondere ein Frontlenker-Lastkraftwagen, vorgeschlagen, der eine Vorderachse aufweist, die einen Starrachskörper aufweist, der über mehrere in Querrichtung beabstandete Längslenker als Lenker geführt ist, welche jeweils rahmenseitig, insbesondere an rahmenfesten Lagerschilden, angelenkt sind. Weiter ist ein in Fahrtrichtung vorderen Stoßfänger sowie ein, bezogen auf die Hochachsenrichtung, darunter angeordneten Unterfahrschutz vorgesehen, wobei der Unterfahrschutz in einer definierten Höhe, insbesondere in etwa in der Höhe einer PKW-Stoßstange, angeordnet ist. Erfindungsgemäß ist vorgesehen, dass der Unterfahrschutz mit je einem aufprallenergieverzehrend ausgebildeten Halterungselement an je einem der Längslenker abgestützt und/oder befestigt ist.

Mit der erfindungsgemäßen Maßnahme wird somit der vordere Unterfahrschutz nicht mehr unmittelbar an Rahmenteilen im Frontbereich des Fahrzeugs abgestützt und befestigt, so dass diese Rahmenteile und ihr Umfeld für den Anbau und die Unterbringung anderer erforderlicher Fahrzeugteile zur Verfügung stehen, so dass dadurch vorteilhafte konstruktive Freiräume geschaffen sind. Andererseits sind die Lenker, die eine Vorderachse des Fahrzeugs führen hinsichtlich ihrer Lage und Stabilität für die Anbringung und Abstützung eines vorderen Unterfahrschutzes gut geeignet.

Die Längslenker sind rahmenseitig angelenkt, zum Beispiel an rahmenfesten Lagerschildern und/oder über Lageraugen. Der Unterfahrschutz ist als horizontal und querverlaufender Stoßfängerträger ausgebildet, der unterhalb des Stoßfängers in etwa in der Höhe eines PKW-Stoßfängers angeordnet ist.

Die rahmenseitigen Anlenkstellen der Längslenker, die insbesondere an den rahmenfesten Lagerschilden ausgebildet sind, liegen dabei in Fahrtrichtung vor dem Starrachskörper. Dadurch können die Längslenker ausgehend von den Anlenkstellen, vorzugsweise schräg nach unten sowie nach hinten zum Starrachskörper verlaufen.

Zweckmäßig werden identische, insbesondere hinsichtlich des Wirkprinzips identische, Halterungselemente für den Unterfahrschutz an beiden Längslenkern verwendet. Je nach den konstruktiven Gegebenheiten können auch unterschiedlich ausgebildete Halterungselemente, wie sie weiter unten erläutert sind, kombiniert werden.

Die vorstehende Ausführungsform stellt in Verbindung mit einem Nutzfahrzeug, wie zum Beispiel einem Frontlenker-Lastkraftwagen, einem Starrachskörper und zwei Längslenkern eine hinsichtlich der Platzbeanspruchung besonders günstige Befestigung dar.

Der Anschluss der beiden Halterungselemente am Unterfahrschutz soll lagefixiert und die Halterungselemente am vorderen Ende jeweils entsprechend ausgebildet sein. Das jeweils hintere Ende der Halterungselemente wird zweckmäßig an einer am zugeordneten Längslenker vorhandenen Konsole abgestützt und befestigt.

Eine solche Konsole kann je nach den Gegebenheiten einstückig mit dem zugeordneten Lenker bzw. Längslenker ausgebildet sein, insbesondere an diesem angegossen oder angeschmiedet sein. Alternativ kann jeweils eine Konsole durch ein separates Bauteil und damit eigenständig hergestellt und am Lenker bzw. Längslenker an einem dort vorbereiteten Ort lagefest montiert werden.

Hinsichtlich einer geeigneten Einbauhöhe und Funktion der Halterungselemente ist es günstig, wenn die zugeordneten Konsolen an der Unterseite des jeweiligen Lenkers nach unten auskragend und benachbart zu einer rahmenseitigen Lagerstelle, insbesondere benachbart zu einem vorderen Lagerauge, angeordnet sind.

Eine Baueinheit, gegebenenfalls als günstige Vormontageeinheit wird dadurch erreicht, dass die Lenker bzw. Längslenker zur Bildung einer Verbundlenkervorderachse ortsfest an deren Starrachskörper befestigt sind und somit auch der über die Halterungselemente angeschlossene Unterfahrschutz im montierten Zustand eine Baueinheit mit der Verbundlenkervorderachse bildet.

Konstruktiv einfach und kostengünstig kann jedes Halterungselement durch ein einstückiges oder mehrteiliges Bauteil gebildet sein, zum Beispiel durch ein aus mehreren vorgefertigten Einzelteilen zusammengeschweißtes Blech-Stanz-Biegeteil, mit vorderen und hinteren Anschlussstellen für die Befestigung am Unterfahrschutz und der lenkerseitigen Konsole gebildet werden.

Jedes Halterungselement kann wenigstens eine die Nachgiebigkeit bei einem Aufprall eines zum Beispiel PKWs sicherstellende Faltzone mit der Funktion eines Deformationselements aufweisen.

In einer konkreten bevorzugten Ausführungsform besteht jedes Halterungselement aus einer, zum Beispiel von einer unterfahrschutzinternen Tragplatte, nach hinten abragenden Führungsstange und einem von dieser getragenen, die Nachgiebigkeit sicherstellenden, energieverzehrenden Element. Die Führungsstange ist dabei in einer koaxial zu dieser in einer lenkerseitig ausgebildeten Führungsöffnung axial verschiebbar aufgenommen, wobei sich das energieverzehrende Element vorne, am Unterfahrschutz, insbesondere an einer Tragplatte des Unterfahrschutzes, und hinten an einem zugeordneten lenkerseitigen Abstützbereich, zum Beispiel an einer Stirnseite einer lenkerseitigen Konsole abstützt.

Das bei einem Aufprall energieverzehrende Element kann, insbesondere bei einer Ausführungsform mit einer Führungsstange, durch ein vorgespanntes Federelement, zum Beispiel durch eine vorgespannte Schraubenfeder, gebildet sein. Alternativ ist dieses Element durch ein, aus geeignetem Spezialstahl hergestelltes, Wellrohr gebildet.

Anhand einer Zeichnung wird die Erfindung weiter erläutert.

Es zeigen:
- Fig. 1: einen vertikalen Längsschnitt durch einen unteren Frontbereich eines Frontlenker-Lastkraftwagens mit einem Unterfahrschutz mit einer ersten Ausführungsform eines Halterungselements,
- Fig. 2: einen Längsschnitt entsprechend Fig. 1 mit einer zweiten Ausführungsform eines Halterungselements,
- Fig. 3: einen Längsschnitt entsprechend Fig. 1 mit einer dritten Ausführungsform eines Halterungselements, und
- Fig. 4: einen Längsschnitt entsprechend Fig. 1 mit einer vierten Ausführungsform eines Halterungselements.

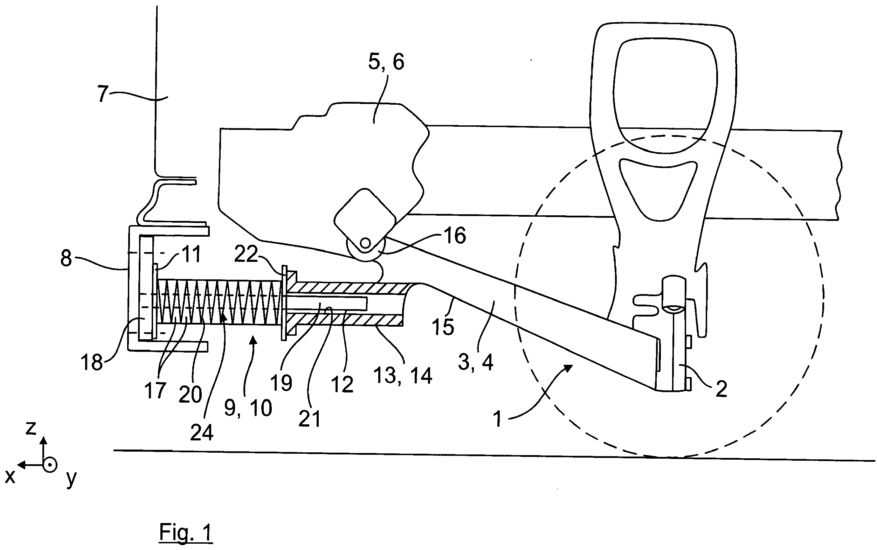

In Fig. 1 ist ein vertikaler Längsschnitt durch einen in Hochachsenrichtung z unteren Frontbereich eines Frontlenker-Lastkraftwagens gezeigt mit einer Verbundlenkervorderachse 1, welche einen Starrachskörper 2 aufweist, der mit in Querrichtung y beabstandeten zwei Lenkern 3, 4 geführt ist. Die Längslenker 3, 4 sind zur Bildung einer Verbundlenkervorderachse 1 ortsfest an deren Starrachskörper 2 befestigt. Am in Fahrtrichtung x vorderen Ende sind die Längslenker 3, 4 über vordere Lageraugen 16 schwenkbar jeweils an rahmenfesten Lagerschilden 5, 6 angelenkt.

Unter einem vorderen LKW-Stoßfänger 7 ist horizontal in Querrichtung y verlaufend ein Unterfahrschutz 8 in etwa in der Höhe einer hier nicht gezeigten PKW-Stoßstange angeordnet. Der Unterfahrschutz 8 weist einen horizontal quer angeordneten U-Träger auf, der jeweils über Halterungselemente 9, 10 mit den zugeordneten Längslenkern 3, 4 verbunden und abgestützt ist.

In Fig. 1 ist eine erste Ausführungsform der beiden identischen Halterungselemente 9, 10 im teilweisen Längsschnitt gezeigt: jedes Halterungselement 9, 10 besteht hier aus einer unterfahrschutzinternen Tragplatte 18 und einer davon nach hinten abragenden Führungsstange 19, welche in einer koaxial zu dieser jeweils in einer längslenkerseitigen Konsole 13, 14 ausgebildeten Führungsöffnung bzw. Führungsbohrung 21 axial verschiebbar aufgenommen ist. Zwischen der Tragplatte 18 des Unterfahrschutzes 8 und der Stirnseite 22 der Konsole 13, 14 ist auf die Führungsstange 19 ein energieverzehrendes Element 20 eingespannt, welches bei einem Aufprall nachgibt, so dass der Unterfahrschutz 8 unter Umwandlung von kinetischer Energie in Verformungsenergie in Richtung auf den Achskörper 2 verschiebbar ist. Für diese Funktion weisen die energieverzehrenden Elemente 20 jeweils wenigstens eine die Nachgiebigkeit bei einem Aufprall eines PKW sicherstellende Faltzone 17 auf. Das energieverzehrende Element 20 ist hier zum Beispiel ein aus einem Spezialstahl hergestelltes Wellrohr 24 mit mehreren hintereinander liegenden Faltzonen 17.

Die Halterungselemente 9, 10 können jeweils einstückig hergestellt oder aus mehreren vorgefertigten Einzelteilen als zusammengeschweißte Blech-Stanz-Biegeteile mit vorderen und hinteren Anschlussstellen 11, 12 für die Befestigung am Unterfahrschutz 8 und der längslenkerseitigen Konsolen 13, 14 gebildet sein. Durch die Verbindung der Längslenker 3, 4 mit dem Starrachskörper 2 und den über die Halterungselemente 9, 10 angeschlossenen Unterfahrschutz 8 ergibt sich im montierten Zustand eine Baueinheit mit der Verbundlenkervorderachse 1.

Die Konsole 13, 14 mit der Führungsbohrung 21 ist hier jeweils einstückig mit zugeordneten Längslenkern 3, 4 ausgebildet und kann angegossen oder angeschmiedet mit anschließender Nachbearbeitung ausgebildet sein. Dabei ist die Konsole 13, 14 jeweils an der Unterseite 15 der zugeordneten Längslenker 3, 4 nach unten auskragend und benachbart zum vorderen Lagerauge 16 angeordnet.

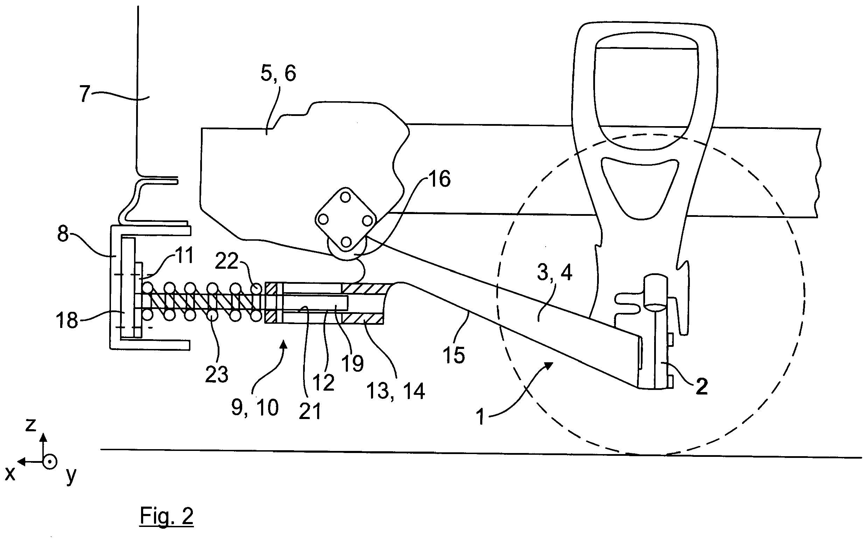

In Fig. 2 ist eine zweite Ausführungsform der Halterungselemente 9, 10 gezeigt, welche weitgehend gleich der ersten Ausführungsform nach Fig. 1 aufgebaut ist. Der Unterschied dazu besteht darin, das als energieverzehrendes Element 20 hier anstelle eines Wellrohrs 24 eine vorgespannte Schraubenfeder 23 auf die Führungsstange 19 aufgesteckt ist und zwischen der Tragplatte 18 und der Stirnseite 22 der Konsole 13, 14 abgestützt ist.

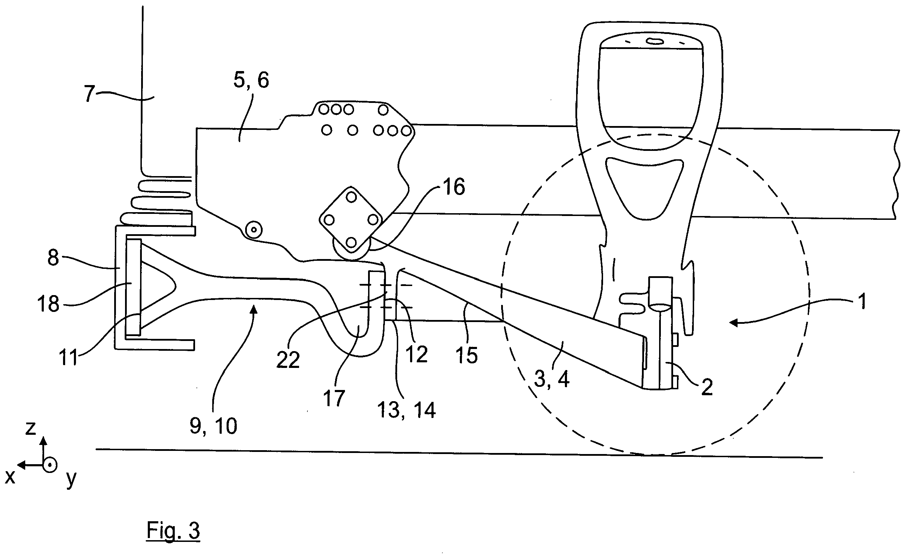

In Fig. 3 ist eine dritte Ausführungsform einer Verbundlenkervorderachse 1 mit einem Unterfahrschutz 8 dargestellt, wobei der grundsätzliche Aufbau entsprechend den Fig. 1 und 2 ausgeführt ist. Als Halterungselemente 9, 10 sind hier jedoch jeweils ein Stütz- und Verbindungsteil, vorzugsweise aus Flachmaterial, verwendet, welches an der Vorderseite wiederum eine Tragplatte 18 aufweist und im hinteren Bereich zu einer Faltzone 17 abgebogen und so gekröpft ist, dass eine flächige Anlage an der Stirnseite 22 der jeweils zugeordneten Konsole 13, 14 mit einer Schraubverbindung hergestellt ist.

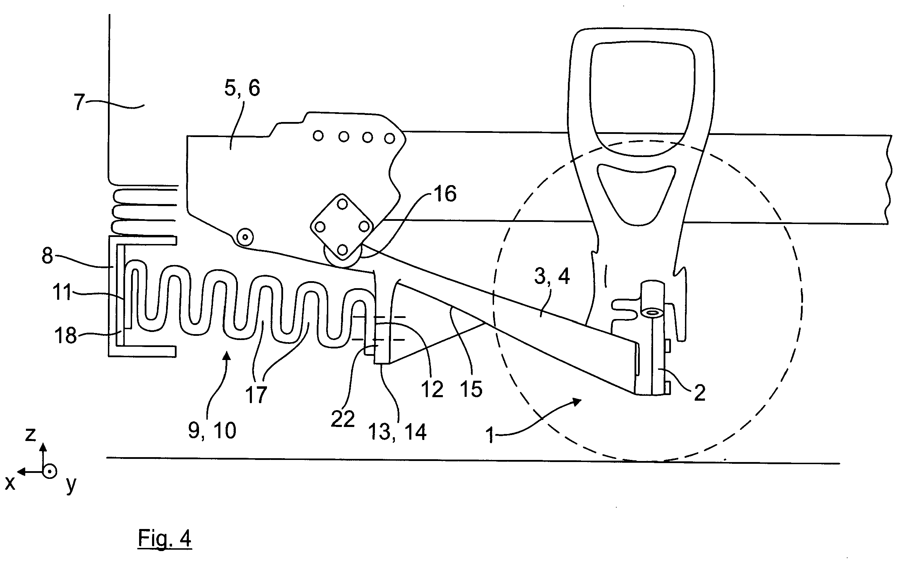

Die vierte Ausführungsform nach Fig. 4 entspricht grundsätzlich etwa der Ausführungsform nach Fig. 3, wobei jedoch mehrere Faltzonen 17 in Faltrichtung hintereinander angeordnet sind.

### Bezugszeichenliste

- 1: Verbundlenkervorderachse
- 2: Starrachskörper
- 3: Längslenker
- 4: Längslenker
- 5: Lagerschild
- 6: Lagerschild
- 7: LKW-Stoßfänger
- 8: Unterfahrschutz
- 9: Halterungselement
- 10: Halterungselement
- 11: Anschlussstelle
- 12: Anschlussstelle
- 13: Konsole
- 14: Konsole
- 15: Unterseite
- 16: Lagerauge
- 17: Faltzone
- 18: Tragplatte
- 19: Führungsstange
- 20: energieverzehrendes Element
- 21: Führungsbohrung
- 22: Stirnseite
- 23: Schraubenfeder
- 24: Wellrohr

## Patentansprüche

1. Nutzfahrzeug, insbesondere Frontlenker-Lastkraftwagen, mit einer Vorderachse (1), die einen Starrachskörper (2) aufweist, der über mehrere in Querrichtung beabstandete Längslenker (3, 4) als Lenker geführt ist, welche jeweils rahmenseitig, insbesondere an rahmenfesten Lagerschilden (5, 6), angelenkt sind, und mit einem in Fahrtrichtung vorderen Stoßfänger (7) sowie einem, bezogen auf die Hochachsenrichtung, darunter angeordneten Unterfahrschutz (8), wobei der Unterfahrschutz (8) in einer definierten Höhe, insbesondere in etwa in der Höhe einer PKW-Stoßstange, angeordnet ist,
**dadurch gekennzeichnet,**
**dass** der Unterfahrschutz (8) mit je einem aufprallenergieverzehrend ausgebildeten Halterungselement (9, 10) ohne unmittelbare rahmenseitige Abstützung und Befestigung derselben an je einem der Längslenker (3, 4) abgestützt und/oder befestigt ist.

2. Nutzfahrzeug nach Anspruch 1, **dadurch gekennzeichnet, dass** die rahmenseitigen Anlenkstellen (16) der Längslenker (3, 4), insbesondere als in Fahrtrichtung vordere Lageraugen an rahmenfesten Lagerschilden (5, 6), in Fahrtrichtung vor dem Starrachskörper (2) liegen.

3. Nutzfahrzeug nach Anspruch 1 oder 2, **dadurch gekennzeichnet, dass** jedes Halterungselement (9, 10) an seinem in Fahrtrichtung vorderen Ende oder Endbereich (11) für einen lagefixierten Anschluss am Unterfahrschutz (8) ausgebildet ist, und/oder dass jedes Halterungselement (9, 10) mit seinem in Fahrtrichtung hinteren Ende oder Endbereich (12) an einer am jeweils zugeordneten Längslenker (3, 4) vorhandenen Konsole (13, 14) abgestützt und/oder befestigt ist.

4. Nutzfahrzeug nach Anspruch 3, **dadurch gekennzeichnet, dass** die jeweilige Konsole (13, 14) einstückig mit dem zugeordneten Längslenker (3, 4) ausgebildet ist, insbesondere an diesem mit angegossen oder im Gesenkschmiedeverfahren mit angeschmiedet und anschließend spanabhebend nachbearbeitet ist.

5. Nutzfahrzeug nach Anspruch 3, **dadurch gekennzeichnet, dass** die jeweilige Konsole (13, 14) durch ein separates Bauteil gebildet ist, das am jeweils zugeordneten Längslenker (3, 4) befestigt und/oder lagefest angebaut ist.

6. Nutzfahrzeug nach einem der Ansprüche 3 bis 5, **dadurch gekennzeichnet, dass** die Konsole (13, 14) an der, bezogen auf die Fahrzeughochachsenrichtung, Unterseite (15) des Längslenkers (3, 4) nach unten auskragend und/oder benachbart zu einer rahmenseitigen Lagerstelle (16), insbesondere benachbart zu einem vorderen Lagerauge, angeordnet ist.

7. Nutzfahrzeug nach einem der vorhergehenden Ansprüche, **dadurch gekennzeichnet, dass** der wenigstens eine Längslenker (34) zur Bildung einer Verbundlenkerachse (1) ortsfest an deren Starrachskörper (2) befestigt ist und somit auch der über das wenigstens eine Halterungselement (9, 10) angeschlossene Unterfahrschutz (8) im montierten Zustand eine Baueinheit mit der Verbundlenkerachse (1) bildet.

8. Nutzfahrzeug nach einem der Ansprüche 1 bis 7, **dadurch gekennzeichnet, dass** das wenigstens eine Halterungselement (9, 10) durch ein einstückiges oder mehrteiliges Bauteil, insbesondere ein aus mehreren vorgefertigten Einzelteilen zusammengeschweißtes Blech-Stanz-Biegeteil, mit bezogen auf die Fahrtrichtung, vorderen und hinteren Anschlussstellen (11, 12) für die Befestigung am Unterfahrschutz (8) und am zugeordneten Längalenker (3, 4), insbesondere an einer lenkerseitigen Konsole (13, 14), ausgebildet ist.

9. Nutzfahrzeug nach einem der Ansprüche 1 bis 8, **dadurch gekennzeichnet, dass** das wenigstens eine Halterungselement (9, 10) durch ein Rohrstück oder ein Flachmaterial gebildet ist.

10. Nutzfahrzeug nach den Ansprüchen 8 oder 9, **dadurch gekennzeichnet, dass** das wenigstens eine Halterungselement (9, 10) wenigstens eine, insbesondere die Nachgiebigkeit bei einem Aufprall sicherstellende, Faltzone (17) aufweist.

11. Nutzfahrzeug nach einem der Ansprüche 1 bis 7, **dadurch gekennzeichnet, dass** das wenigstens eine Halterungselement (9, 10) eine Führungsstange (19), vorzugsweise eine von einer unterfahrschutzinternen Tragplatte (18) nach hinten abragende Führungsstange (19), und ein von dieser getragenes, bei einem Aufprall die Nachgiebigkeit sicherstellendes, energieverzehrendes Element (20) aufweist, wobei die Führungsstange (19) in einer koaxial zu dieser ausgebildeten lenkerseitigen Führungsöffnung (21), insbesondere in einer koaxial zu dieser in einer lenkerseitigen Konsole (13, 14) ausgebildeten Führungsöffnung (21), axial verschiebbar aufgenommen ist, wobei sich das energieverzehrende Element (20) in Fahrtrichtung gesehen vorne am Unterfahrschutz (8), vorzugsweise an einer Tragplatte (18) des Unterfahrschutzes (8), und in Fahrtrichtung gesehen hinten an einem Abstützbereich des Längslenkers (3, 4), insbesondere an der Stirnseite (22) einer lenkerseitigen Konsole (13, 14) abstützt.

12. Nutzfahrzeug nach Anspruch 11, **dadurch gekennzeichnet, dass** das energieverzehrende Element (20) durch ein vorgespanntes Federelement, insbesondere durch eine vorgespannte Schraubenfeder (23), gebildet ist.

13. Nutzfahrzeug nach Anspruch 11, **dadurch gekennzeichnet, dass** das energieverzehrende Element (20) durch ein Wellrohr (24) gebildet ist.

## Claims

1. Utility vehicle, in particular cab-over-engine lorry, having a front axle (1) which has a rigid axle body (2) which is guided via a plurality of longitudinal control arms (3, 4) as control arms spaced apart in the transverse direction, which in each case are articulated on the frame side, in particular on bearing plates (5, 6) fixed to the frame, and having a front bumper (7) in the direction of travel and an underride protection (8) arranged thereunder relative to the direction of the vertical axis, wherein the underride protection (8) is arranged at a defined height, in particular approximately at the height of a passenger motor vehicle bumper,
**characterized**
**in that** the underride protection (8) is supported and/or fastened on one respective retaining element (9, 10), which is configured so as to dissipate impact energy, without direct frame-side support and fastening thereof, on one respective longitudinal control arm (3, 4).

2. Utility vehicle according to Claim 1, **characterized in that** the points of articulation (16) of the longitudinal control arms (3, 4) on the frame side, in particular as front bearing eyes in the direction of travel on bearing plates (5, 6) fixed to the frame, are located in the direction of travel in front of the rigid axle body (2).

3. Utility vehicle according to Claim 1 or 2, **characterized in that** each retaining element (9, 10) at its front end or end region (11) in the direction of travel, is configured for fixed connection to the underride protection (8), and/or each retaining element (9, 10) with its rear end or end region (12) in the direction of travel is supported and/or fastened on a bracket (13, 14) present on the respectively assigned longitudinal control arm (3, 4).

4. Utility vehicle according to Claim 3, **characterized in that** the respective bracket (13, 14) is integrally configured with the assigned longitudinal control arm (3, 4), in particular cast thereon or forged thereon in a drop forging method and subsequently post-machined to remove chips.

5. Utility vehicle according to Claim 3, **characterized in that** the respective bracket (13, 14) is formed by a separate component, which is fastened and/or attached fixedly to the respectively assigned longitudinal control arm (3, 4).

6. Utility vehicle according to one of Claims 3 to 5, **characterized in that** the bracket (13, 14) is arranged on the lower face (15) of the longitudinal control arm (3, 4), relative to the vertical axis direction of the vehicle, so as to protrude downwards and/or adjacent to a bearing point (16) on the frame side, in particular adjacent to a front bearing eye.

7. Utility vehicle according to one of the preceding claims, **characterized in that** the at least one longitudinal control arm (34) for forming a twist beam suspension (1) is fastened fixedly to the rigid axle body (2) thereof and thus the underride protection (8) attached via the at least one retaining element (9, 10) in the mounted state also forms a structural unit with the twist beam suspension (1).

8. Utility vehicle according to one of Claims 1 to 7, **characterized in that** the at least one retaining element (9, 10) is configured by a one-piece or multipart component, in particular a stamped bent sheet metal part welded together from a plurality of prefabricated individual parts, with front and rear connecting points (11, 12) relative to the direction of travel, for the fastening to the underride protection (8) and to the assigned longitudinal control arm (3, 4), in particular to a bracket (13, 14) on the control arm side.

9. Utility vehicle according to one of Claims 1 to 8, **characterized in that** the at least one retaining element (9, 10) is formed by a tubular piece or a flat material.

10. Utility vehicle according to Claims 8 or 9, **characterized in that** the at least one retaining element (9, 10) has at least one folded zone (17), in particular ensuring the resilience in the event of an impact.

11. Utility vehicle according to one of Claims 1 to 7, **characterized in that** the at least one retaining element (9, 10) has a guide rod (19), preferably a guide rod (19) protruding to the rear from a support plate (18) inside the underride protection, and an energy-dissipating element (20) carried thereby and ensuring the resilience in the event of an impact, wherein the guide rod (19) is received in an axially displaceable manner in a guide opening (21) configured coaxially thereto on the control arm side, in particular in a guide opening (21) configured in a control arm (13, 14) coaxially thereto on the control arm side, wherein the energy-dissipating element (20) viewed in the direction of travel is supported at the front on the underride protection (8) preferably on a support plate (18) of the underride protection (8) and at the rear viewed in the direction of travel, on a supporting region of the longitudinal control arm (3, 4), in particular on the front face (22) of a bracket (13, 14) on the control arm side.

12. Utility vehicle according to Claim 11, **characterized in that** the energy-dissipating element (20) is formed by a pretensioned spring element, in particular by a pretensioned helical spring (23).

13. Utility vehicle according to Claim 11, **characterized in that** the energy-dissipating element (20) is formed by a corrugated tube (24).

## Revendications

1. Véhicule utilitaire, en particulier camion à cabine avancée, avec un essieu avant (1), qui présente un corps d'essieu rigide (2), qui est guidé comme bras oscillant par plusieurs bras oscillants longitudinaux (3, 4) espacés en direction transversale, qui sont respectivement articulés côté châssis, en particulier à des flasques (5, 6) solidaires du châssis, et avec un pare-chocs avant (7) dans le sens de la marche, ainsi qu'avec une protection anti-encastrement (8) disposée sous celui-ci par rapport à la direction d'un axe vertical, dans lequel la protection anti-encastrement (8) est disposée à une hauteur définie, en particulier environ à la hauteur d'un pare-chocs de voiture,
**caractérisé en ce que** la protection anti-encastrement (8) est supportée et/ou fixée à un des bras oscillants longitudinaux (3, 4) avec chaque fois un élément de support (9, 10) capable de dégrader l'énergie d'une collision sans support et fixation direct(e) de celui-ci au châssis.

2. Véhicule utilitaire selon la revendication 1, **caractérisé en ce que** les points d'articulation au châssis (16) des bras oscillants longitudinaux (3, 4), en particulier sous la forme d'oeil de palier avant dans le sens de la marche sur des flasques solidaires du châssis (5, 6), sont situés avant le corps d'essieu rigide (2) dans le sens de la marche.

3. Véhicule utilitaire selon la revendication 1 ou 2, **caractérisé en ce que** chaque élément de support (9, 10) est configuré à son extrémité avant ou dans sa région d'extrémité avant (11) dans le sens de la marche en vue d'un raccordement en position fixe à la protection anti-encastrement (8), et/ou **en ce que** chaque élément de support (9, 10) est supporté et/ou fixé avec son extrémité arrière ou sa région d'extrémité arrière (12) dans le sens de la marche à une console (13, 14) présente sur le bras oscillant longitudinal respectivement associé (3, 4).

4. Véhicule utilitaire selon la revendication 3, **caractérisé en ce que** la console respective (13, 14) est formée d'une pièce avec le bras oscillant longitudinal associé (3, 4), en particulier est coulée avec celui-ci ou est forgée par un procédé de matriçage et est ensuite usinée par enlèvement de copeaux.

5. Véhicule utilitaire selon la revendication 3, **caractérisé en ce que** la console respective (13, 14) est formée par un composant séparé, qui est fixé et/ou monté fixement sur le bras oscillant longitudinal respectivement associé (3, 4).

6. Véhicule utilitaire selon l'une quelconque des revendications 3 à 5, **caractérisé en ce que** la console (13, 14) est disposée sur le côté inférieur (15), par rapport à la direction d'un axe vertical du véhicule, du bras oscillant longitudinal (3, 4), en saillie vers le bas et/ou à proximité d'un point d'appui (16) au châssis, en particulier à proximité d'un oeil de palier avant.

7. Véhicule utilitaire selon l'une quelconque des revendications précédentes, **caractérisé en ce que**, pour la formation d'un essieu à traverse déformable en torsion (1), ledit au moins un bras oscillant longitudinal (34) est fixé à son corps d'essieu rigide (2) et de ce fait la protection anti-encastrement (8) raccordée par ledit au moins un élément de support (9, 10) forme également à l'état monté une unité de construction avec l'essieu à traverse déformable en torsion (1).

8. Véhicule utilitaire selon l'une quelconque des revendications 1 à 7, **caractérisé en ce que** ledit au moins un élément de support (9, 10) est formé par un composant en une seule pièce ou en plusieurs parties, en particulier une pièce de tôle pliée par estampage assemblée par soudage de plusieurs parties individuelles préfabriquées, avec des points de raccordement avant et arrière (11, 12) par rapport au sens de la marche pour la fixation à la protection anti-encastrement (8) et au bras oscillant longitudinal associé (3, 4), en particulier à une console côté bras oscillant (13, 14).

9. Véhicule utilitaire selon l'une quelconque des revendications 1 à 8, **caractérisé en ce que** ledit au moins un élément de support (9, 10) est formé par une pièce tubulaire ou un matériau plat.

10. Véhicule utilitaire selon la revendication 8 ou 9, **caractérisé en ce que** ledit au moins un élément de support (9, 10) présente au moins une zone pliable (17), en particulier assurant la déformabilité lors d'une collision.

11. Véhicule utilitaire selon l'une quelconque des revendications 1 à 7, **caractérisé en ce que** ledit au moins un élément de support (9, 10) présente une tige de guidage (19), de préférence une tige de guidage (19) saillante vers l'arrière à partir d'une plaque porteuse (18) à l'intérieur de la protection anti-encastrement, et un élément (20) capable de dégrader l'énergie, porté par celle-ci et assurant la déformabilité lors d'une collision, dans lequel la tige de guidage (19) est logée de façon axialement déplaçable dans une ouverture de guidage (21) côté bras oscillant formée de façon coaxiale à celle-ci, en particulier dans une ouverture de guidage (21) formée de façon coaxiale à celle-ci dans une console côté bras oscillant (13, 14), dans lequel l'élément capable de dégrader l'énergie (20) s'appuie à l'avant dans le sens de la marche sur la protection anti-encastrement (8), de préférence sur une plaque porteuse (18) de la protection anti-encastrement (8), et à l'arrière dans le sens de la marche sur une région d'appui du bras oscillant longitudinal (3, 4), en particulier sur le côté frontal (22) d'une console côté bras oscillant (13, 14).

12. Véhicule utilitaire selon la revendication 11, **caractérisé en ce que** l'élément capable de dégrader l'énergie (20) est formé par un élément de ressort précontraint, en particulier par un ressort hélicoïdal précontraint (23).

13. Véhicule utilitaire selon la revendication 11, **caractérisé en ce que** l'élément capable de dégrader l'énergie (20) est formé par un tube ondulé (24).
